Europäisches Patentamt

European Patent Office

Office européen des brevets

(11) Veröffentlichungsnummer : **0 052 164**
**B1**

(12) **EUROPÄISCHE PATENTSCHRIFT**

(45) Veröffentlichungstag der Patentschrift :
02.05.84

(51) Int. Cl.³ : **F 24 D   3/00, E 04 C   5/04**

(21) Anmeldenummer : **80107791.8**

(22) Anmeldetag : **11.12.80**

(54) **Gitter zum Verlegen von elastischen Rohren oder Schläuchen.**

(30) Priorität : **14.11.80 DE 3043001**

(43) Veröffentlichungstag der Anmeldung :
**26.05.82 Patentblatt 82/21**

(45) Bekanntmachung des Hinweises auf die Patenterteilung : **02.05.84 Patentblatt 84/18**

(84) Benannte Vertragsstaaten :
**DE**

(56) Entgegenhaltungen :
**FR-A-   750 875**
**FR-A-   782 787**
**FR-A- 2 138 690**
**FR-A- 2 436 317**

(73) Patentinhaber : **Neckardrahtwerke GmbH**
**Friedrichsstrasse 16**
**D-6830 Eberbach (DE)**
**DE**
**TA ROKAL GmbH**
**Neckarstrasse 37**
**D-4330 Mühlheim/Ruhr (DE)**
**DE**

(72) Erfinder : **Joho, Ludwig**
**Friedrich-Ebert-Strasse 12**
**D-6930 Eberbach/Neckar (DE)**
Erfinder : **Krapf, Hans**
**Höhenstrasse 50**
**D-6830 Eberbach/Neckar (DE)**
Erfinder : **Heger, Wolfram Hubertus**
**Ostenallee 82**
**D-4700 Hamm I. W. (DE)**
Erfinder : **Knöchelmann, Heinz**
**Waldweg 37**
**D-4224 Hünxe/Bruckhausen (DE)**

(74) Vertreter : **Blumbach Weser Bergen Kramer Zwirner**
**Brehm Patentanwälte**
**Radeckestrasse 43**
**D-8000 München 60 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Gitter zum Verlegen von elastischen Rohren oder Schläuchen

Die Erfindung betrifft ein Gitter gemäß dem Oberbegriff des Anspruches 1.

Derartige Gitter dienen der Positionierung von zu verlegenden elastischen Rohren bzw. Schläuchen in Fußböden, Wänden oder Decken durch die zum Heizen oder zum Kühlen ein Heiz- bzw. ein Kühlmittel hindurchgeleitet wird. In der Regel bestehen Fußbodenheizungen aus einer Isolierschicht, die aus Hartschaumplatten oder Mineralwolle zusammengesetzt und durch eine Kunststoff-Folie, Bitumenpapier oder dergleichen abgedeckt ist. Auf dieser Folie liegt ein Gitter, welches mit Halteorganen aus separaten Kunststoffrohrschellen versehen ist, die die zu verlegenden Rohre aufnehmen. Das Ganze ist in einen Estrich eingebettet.

Bei diesem Aufbau müssen vor dem Verlegen der Rohre die Kunststoffrohrschellen am Gitter festgeklemmt werden. Dies erfordert einen zusätzlichen Arbeitsgang. Ferner sind für verschiedene Rohrdurchmesser auch verschieden große Kunststoffrohrschellen erforderlich. Schließlich besteht die Gefahr, daß sich die Kunststoffrohrschellen beim Einbringen der Rohre oder des Estrichs vom Gitter lösen und damit die gewünschte Anordnung der Rohre nicht mehr gewährleistet ist.

Durch die FR-A-750 875 ist ein Gitter für die Bewehrung von Decken oder Wänden bekanntgeworden, bei dem ein Teil der Gitterstäbe durch Rohre ersetzt ist durch die ein Heizmittel hindurchgeleitet wird.

In der FR-A-782 787 ist eine Deckenheizung beschrieben, bei der die Rohre durch Rohrschellen aus Metall gehalten werde, die wiederum auf einer Schalung befestigt sind.

Die FR-A-2 436 317 beschreibt ein Fußbodenheizungssystem, bei dem als Halterung für elastische Rohre bzw. Schläuche, Bögen aus Metall vorgesehen sind, die auf parallel liegenden Stäben aufgeschweißt sind, welche wiederum auf der Schalung befestigt werden. Die Bögen zum Halten des Rohres sind so angeordnet, daß aufgrund der Eigenelastizität eine Klemmwirkung innerhalb der Halterung erzielt wird. Diese Halterung bedingt hohe Herstellungskosten und ist nur mit grossem Aufwand an verschiedene Verlegemuster anpaßbar.

Durch die FR-A-2 138 690 ist eine Fußbodenheizung bekanntgeworden, bei der das Rohrleitungssystem auf einer Baustahlmatte befestigt ist, die mit Distanzhaltern in einer vorgegebenen Höhe oberhalb des Untergrunds gehalten wird. Die Distanzhalter sind als aus der Baustahlmatte herausgebogene Nasen ausgebildet. Die Baustahlmatte erfüllt neben der Aufgabe das Rohrleitungssystem zu stützen auch eine Armierungsfunktion innerhalb des Estrichs.

Der Erfindung liegt die Aufgabe zugrunde, ein Gitter der im Gattungsbegriff des Anspruches 1 genannten Art verfügbar zu machen, das bereits bei der Herstellung des Gitters mit Haltorganen ausgebildet werden kann, so daß ein nachträgliches Anbringen an der Baustelle entfällt, die Halteorgane in ihrer Position fixiert sind, so daß ein Lösen oder Verschieben von Halteorganen ausgeschlossen ist und das Gitter eine Vielfalt and Verlegemöglichkeiten für alle praktisch vorkommenden Rohrdurchmesser zuläßt. Der Arbeitsgang der Verlegung soll wesentlich beschleunigt und vereinfacht werden. Es soll eine sichere Befestigung bzw. ein Niederhalten der zu verlegenden Rohre gewährleistet sein, außerdem soll das Gitter als Bewehrungselement einsetzbar und ohne besondere Maßnahmen beim Verlegen im vorgeschriebenen Abstand vom Untergrund angeordnet werden können.

Die Aufgabe wird durch die Merkmale des Anspruches 1 gelöst. Vorteilhafte Ausgestaltungen der Erfindung sind den Unteransprüchen zu entnehmen.

Danach weist das Gitter Haltestäbe auf, von denen wenigstens jeweils ein Ende aus der vom Gitter gebildeten Gitterebene herausragt und als Halteorgan für die elastischen Rohre bzw. Schläuche winkel- oder bogenförmig verformt ist.

Vorzugsweise weisen diese Halteorgane in der Draufsicht auf das Gitter sowohl in Längs- als auch in Querrichtung des Gitters abwechselnd in entgegengesetzte Richtungen. Durch diese Anordnung der Halteorgane und die Eigenspannung der elastischen Rohre, die bei ihrer Verlegung in Längsrichtung oder in Querrichtung des Gitters entsteht, wird eine sichere Lage ohne weitere Maßnahmen gewährleistet. Ein Lösen der Rohre bzw. Schläuche beim Einbringen des Estrichs wird verhindert. Die so ausgestalteten Halteorgane ermöglichen darüberhinaus eine Verlegung von Rohren mit sämtlichen gebräuchlichen Rohrdurchmessern. Ferner ist eine einfachere und schnellere Rohrverlegung durch Einhängen des Rohres in die winkel- bzw. bogenförmigen Halteorgane gewährleistet als es bei Verwendung von Kunststoffrohrschellen möglich ist.

Vorzugsweise weist das Gitter Distanzstäbe auf, von denen wenigstens jeweils ein Ende als Distanzbogen verformt ist, der aus der den Halteorganen entgegengesetzten Seite der Gitterebene herausragt. Es kann auch jeweils ein Ende eines Haltestabes zu einem Distanzbogen verformt sein. Die Distanzbögen weisen in Richtung der oben erwähnten Isolation bzw. Abdeckfolie und halten das Gitter im gewünschten Abstand von dieser Abdeckfolie. Vorzugsweise sind die Distanzbögen in der Mitte abgeflacht.

Durch die Anordnung und Formgestaltung der Distanzbögen sowie durch die Verwendung geeigneter Stahldrähte zu Herstellung des Gitters erfüllt dieses nicht nur die Aufgabe die elastischen Rohre bzw. Schläuche zu positionieren, sondern auch die Aufgabe den Estrich zu bewehren, in dem das Gitter angeordnet ist. Beim Einbringen des Estrichs gewährleisten die Distanzbögen daß das Gitter als Bewehrung in der gewünschten Höhe im Estrich zu liegen kommt.

Gemäß einer besonders bevorzugten Ausführungsform ist das Gitter aus geraden durchgehenden Gitterstäben und diese kreuzenden Halte- und Distanzstäben zusammengesetzt, wobei die Gitterstäbe durchgehend ausgebildet und an einer Seite der Gitterebene angeordnet sind, während die Halte- und Distanzstäbe jeweils durch Zwischenräume getrennt and der anderen Seite der Gitterebene angeordnet sind.

Die durchgehenden Gitterstäbe bzw. -drähte sind vorzugsweise an der Seite der Gitterebene angeordnet, an der die Halteorgane vorstehen und die Haltestäbe bzw. Distanzstäbe an der Seite der Gitterebene an der die Distanzbögen vorstehen. Auf diese Weise wird in Verbindung mit der oben erwähnten alternierenden Anordnung der Halteorgane erreicht, daß die Rohre auf den durchgehenden Gitterstäben aufliegen und mit den Drahtenden der Distanzbögen nicht in Berührung kommen. Die im verlegten Zustand des Gitters unten liegenden Drähte sind so geschnitten, d. h. die Zwischenräume zwischen den Halte- und Distanzstäben so angeordnet, daß jeweils beidseits bei der Schnittstelle bzw. eines Zwischenraums ein durchgehender Draht verläuft. Damit bleibt die Zugbelastbarkeit und die Bewehrungseigenschaft des Gitters erhalten.

Vorteilhafterweise bilden in der Draufsicht des Gitters die Halteorgane der Haltestäbe mit den durchgehenden Gitterstäben einen Winkel von etwa 45°. Durch diese Anordnung bleibt das verlegte Gitter begehbar und es können durch ein Halteorgan Rohre aufgenommen werden, die entweder in Längsrichtung oder in Querrichtung verlegt sind. Auch für die Verlegung von Bögen sind solche Halteorgane gut geeignet. Kleinster Verlegeabstand in Längs- bzw. Querrichtung ist der Abstand der jeweils parallel verlaufenden Gitterstäbe bzw. Halte- und Distanzstäbe. Verlegeabstände von einem Mehrfachen dieser Mindestabstände sind möglich.

Vorzugsweise ist jeweils das eine Ende eines Haltestabes als Halteorgan und das andere Ende als Distanzbogen verformt. Bei den Distanzstäben ist vorzugsweise jeweils nur ein Ende als Distanzbogen verformt, das andere hingegen gerade. Bei dieser Ausbildung der Haltestäbe und Distanzstäbe werden eine hohe Festigkeit des gesamten Gitters sowie vorzügliche Bewehrungseigenschaften gewährleistet.

Vorzugsweise sind die Enden der Distanzbögen zur Gitterebene hingebogen. Auf diese Weise wird eine Verletzung der Folie auf der die Gitter aufgelegt werden sicher vermieden.

Gemäß einer besonders bevorzugten Ausführungsform sind die Haltestabe und Distanzstäbe in einer Richtung des Gitters in der Weise angeordnet, daß abwechselnd auf zwei entgegengesetzt zueinanderweisende Distanzstäbe zwei entgegengesetzt zueinanderweisende Haltestäbe folgen. Vorzugsweise sind die Haltestäbe und die Distanzstäbe parallel zueinander angeordnet und benachbarte Haltestäbe bzw. Distanzstäbe um mindestens den Abstand zwischen zwei benachbarten Gitterstäben versetzt.

Vorzugsweise bestehen sämtliche Stäbe aus Stahl und die Haltestäbe bzw. Distanzstäbe sind mit den quer dazu verlaufenden Gitterstäben punktverschweißt.

Die Erfindung wird durch ein Ausführungsbeispiel anhand zweier Figuren näher erläutert. Es zeigen

Figur 1  eine Draufsicht auf ein erfindungsgemäßes Gitter,

Figur 2  eine Seitenteilansicht des Gitters.

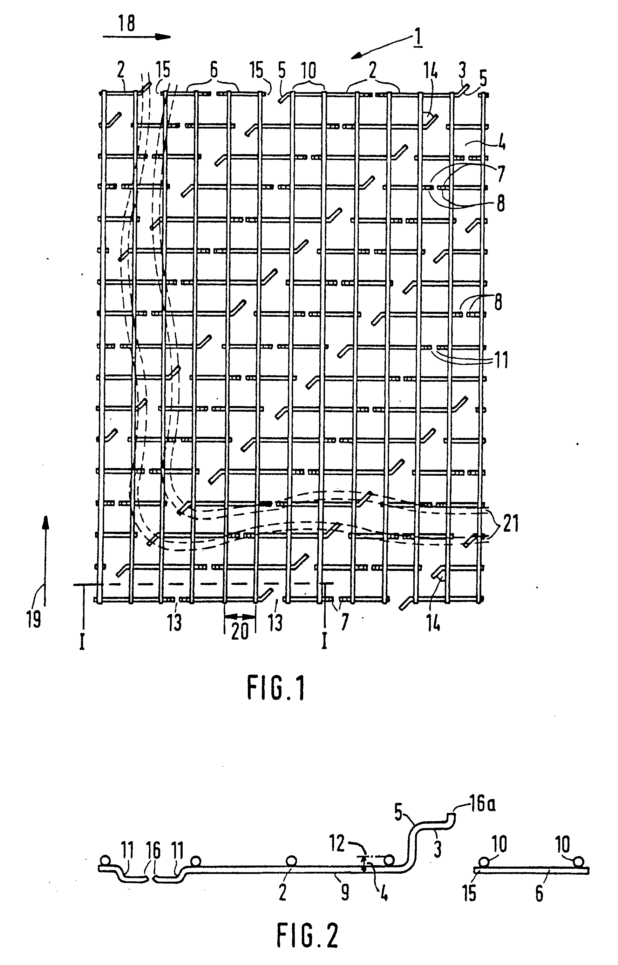

In Figur 1 ist das Gitter von oben gesehen dargestellt. Es besteht aus drei Arten von Stäben, nämlich den Haltestäben 2, den Distanzstäben 6 und den Gitterstäben 10. Die Gitterstäbe 10 sind durchgehend ausgebildet und mit den Haltestäben 2 und den Distanzstäben 6 punktverschweißt. Die Haltestäbe 2 besitzen an einem Ende 3 ein in der Draufsicht um etwa 45° zur Seite gebogenes Halteorgan 5, am anderen Ende 11 einen Distanzbogen 8. Bezüglich der Gitterebene 4, unter der die durch die Haltestäbe 2, die Distanzstäbe 6 und die Gitterstäbe 10 gebildete Ebene verstanden werden soll, ragen die Halteorgane 5 der Haltestäbe 2 bei der Darstellung nach Figur 2 nach oben heraus, die Distanzbögen 8 in entgegengesetzter Richtung nach unten.

Die Distanzstäbe 6 besitzen an einem Ende 7 ebenfalls Distanzbögen 8, die nach unten weisen. Das andere Ende 15 der Distanzstäbe ist gerade.

Bezogen auf Figur 1 sind in horizontaler Richtung 18 die Haltestäbe 2 und die Distanzstäbe in folgender Weise angeordnet.

Auf zwei entgegengesetzt zueinander weisende Distanzstäbe 6 folgen zwei entgegengesetzt zueinander weisende Haltestäbe 2 und dann wieder zwei entgegengesetzt zueinander weisende Distanzstäbe 6 etc. Die Halteorgane 5 der entgegengesetzt zueinander weisenden Haltestäbe weisen somit bei der Darstellung nach Figur 1 einmal nach unten und einmal nach oben. Hierbei bilden die Halteorgane 5 mit den Gitterstäben 10 in der Draufsicht einen Winkel 14 von etwa 45°. Zwischen den Haltestäben 2 und den Distanzstäben 6 entstehen somit Zwischenräume 13.

In horizontaler Richtung 18 sowie in vertikaler Richtung 19 weisen aufeinanderfolgende Halteorgane 5 jeweils in entgegengesetzte Richtung. Durch diese Anordnung der Halteorgane 5 und die Eigenspannung des in Figur 1 gestrichelt dargestellten elastischen Rohres 21 wird erreicht, daß das Rohr ohne Zusatzmaßnahmen sowohl in horizontaler Richtung 18 als auch in vertikaler Richtung 19 elastisch in die Halteorgane gedrückt und festgehalten wird. Die hinsichtlich der Richtung 18 beschriebene Anordnung einer Reihe von Haltestäben 2 und Distanzstäben 6 wiederholt sich in vertikaler Richtung 19, wobei jedoch zwei aufeinanderfolgende Reihen um den Abstand 20 zweier Gitterstäbe 10 versetzt sind. Durch diese Anordnung wird ein dem Abstand zweier Gitterstäbe entsprechender Verlegeabstand für das Rohr und ein Mehrfaches davon längs und quer zur Matte ermöglicht. Ferner wird durch die Distanzbögen 8 erreicht, daß das Gitter in gewünschter Höhe im Estrich zu liegen kommt und demnach die Bewehrungsfunktion voll erfüllen kann.

Figur 2 zeigt eine Seitenteilansicht des Gitters bezüglich der Schnittlinie I-I. Es ist von links gesehen das als Distanzbogen 8 ausgeformte Ende 11 eines Haltestabes 2 dargestellt, darauffolgend ein vollständiger Haltestab 2 und schließlich ein gerades Ende 15 eines Distanzstabes 6. Das Ende 3 des Haltestabes 2 ist als Halteorgan 5 verformt. Dieses steht aus der Seite 12 der Gitterebene 4 vor, während die Distanzbögen 8 auf der Seite 9 der Gitterebene 4 vorstehen. Die Enden 7 (siehe Figur 1) und 16 der Distanzbögen sowie die Enden 16a der Halteorgane sind bei der Darstellung nach Figur 2 nach oben gebogen. Hierdurch wird beim Verlegen der Gitter ein Verletzen der Folie und beim Verlegen der Rohre ein Beschädigen dieser Rohre verhindert. Die durchgehenden Gitterstäbe 10 sind an der Seite 12 der Gitterebene 4 angeordnet. Sie sind nicht unterbrochen und verhindern somit eine Berührung mit den Enden 11 und 15 der Haltestäbe 2 bzw. der Distanzstäbe 6.

## Ansprüche

1. Gitter zum Verlegen von elastischen Rohren (21) bzw. Schläuchen, insbesondere für eine Fußboden-, Wand- oder Deckenheizung oder -kühlung, mit Halteorganen (5) zur Aufnahme der Rohre bzw. Schläuche, dadurch gekennzeichnet, daß das Gitter (1) Haltestäbe (2) aufweist, von denen wenigstens jeweils ein Ende (3) aus der von Gitter (1) gebildeten Gitterebene (4) herausragt und als Halteorgan (5) für die Rohre (21) bzw. Schläuche winkel- oder bogenförmig verformt ist.

2. Gitter nach Anspruch 1, dadurch gekennzeichnet, daß es Haltestäbe (2) aufweist, von denen jeweils ein Ende (3) als auf einer Seite (12) der Gitterebene (4) herausragendes Halteorgan (5) ausgebildet ist und das andere Ende (11) als auf der entgegengesetzten Seite der Gitterebene (4) herausragender Distanzbogen (8).

3. Gitter nach Anspruch 1 oder 2, dadurch gekennzeichnet, daß es Distanzstäbe (6) aufweist, von denen jeweils wenigstens ein Ende (7) als Distanzbogen (8) verformt ist, der aus der den Halteorganen (5) entgegengesetzten Seite (9) der Gitterebene (4) herausragt.

4. Gitter nach einem der Ansprüche 1 bis 3, dadurch gekennzeichnet, daß es aus geraden Gitterstäben (10) und diese kreuzenden Haltestäben (2) und Distanzstäben (6) zusammengesetzt ist, wobei die Gitterstäbe (10) durchgehend an einer Seite (12) der Gitterebene (4) und die Haltestäbe (2) sowie die Distanzstäbe (6) durch Zwischenräume (13) getrennt an der anderen Seite (9) der Gitterebene (4) angeordnet sind.

5. Gitter nach einem der Ansprüche 1 bis 4, dadurch gekennzeichnet, daß in der Draufsicht auf das Gitter (1) die Halteorgane (5) der Haltestäbe (2) mit den Gitterstäben (10) einen Winkel (14) von etwa 45° bilden.

6. Gitter nach einem der Ansprüche 1 bis 5, dadurch gekennzeichnet, daß die Enden (7) der Distanzbögen (8) zur Gitterebene (4) weisen.

7. Gitter nach einem der Ansprüche 1 bis 6, dadurch gekennzeichnet, daß in einer Richtung (18) des Gitters (1) die Haltestäbe (2) und die Distanzstäbe (6) in der Weise angeordnet sind, daß abwechselnd auf zwei entgegengesetzt zueinander weisende Distanzstäbe (6) zwei entgegengesetzt zueinander weisende Haltestäbe (2) folgen.

8. Gitter nach Anspruch 7, dadurch gekennzeichnet, daß benachbarte, parallele Reihenanordnungen aus Haltestäben (2) und Distanzstäben (6) jeweils um mindestens den Abstand (20) zweier benachbarter Gitterstäbe (10) versetzt sind.

## Claims

1. A grid structure for laying elastic pipes (21) or hoses, in particular for a floor, wall or ceiling heating or cooling arrangement, comprising holding members (5) for carrying the pipes or hoses, characterised in that the grid structure (1) has holding bars (2), at least one end (3) of each thereof projecting out of the grid plane (4) formed by the grid structure (1) and being shaped with an angled or arcuate configuration to act as a holding member (5) for the pipes (21) or hoses.

2. A grid structure according to claim 1, characterised in that it has holding bars (2), an end (3) of each thereof being formed as a holding member (5) which projects out of the plane (4) of the grid structure on one side (12) thereof, the other end (11) of each said holding bar being in the form of a curved spacer portion (8) which projects out of the plane (4) of the grid structure on the opposite side thereof.

3. A grid structure according to claim 1 or claim 2, characterised in that it has spacer bars (6), at least one end (7) of each thereof being shaped as a curved spacer portion (8) which projects out of the plane (4) of the grid structure on the side (9) thereof which is opposite to the holding members (5).

4. A grid structure according to one of claims 1 to 3, characterised in that it is made up of straight grid bars (10) and spacer bars (6) and holding bars (2) which cross the grid bars (10), wherein the grid bars (10) are arranged in a continuous configuration at one side (12) of the plane (4) of the grid structure and the holding bars (2) and the spacer bars (6) are arranged at the other side (9) of the plane (4), being separated by spaces (13) therebetween.

5. A grid structure according to one of claims 1 to 4, characterised in that, in a plan view on to the grid structure (1), the holding members (5) of the holding bars (2) form an angle (14) of about 45° to the grid bars (10).

6. A grid structure according to one of claims 1 to 5, characterised in that the ends (7) of the curved spacer portions (8) point towards the plane (4) of the grid structure.

7. A grid structure according to one of claims 1 to 6, characterised in that the holding bars (2) and the spacer bars (6) are arranged in a direction (18) of the grid structure (1) in such a way that two spacer bars (6) wich point in opposite directions to each other are followed alternately by two holding bars (2) which point in opposite directions to each other.

8. A grid structure according to claim 7, characterised in that adjacent parallel row assemblies of holding bars (2) and spacer bars (6) are respectively displaced by at least the spacing (20) of two adjacent grid bars (10).

## Revendications

1. Treillis pour la pose de tubes élastiques (21) ou de conduits souples, notamment pour un chauffage ou une réfrigération par le plancher, le plafond ou le mur, comprenant des organes de maintien (5) destinés à recevoir les tubes ou conduits souples, caractérisé en ce que le treillis (1) comporte des barres de maintien (2), dont au moins l'une des extrémités (3) est en saillies sur le plan (4) formé par le réseau (1) et est conformée en coude ou en arceau pour servir d'organe de maintien (5) des tubes (21) ou des conduits.

2. Treillis suivant la revendication 1, caractérisé en ce qu'il comporte des barres de maintien (2), dont l'une des extrémités (3) est agencée en organe de maintien (5) faisant saillie sur un côté du plan (4) du treillis et dont l'autre extrémité (11) est agencée en arceau d'entretoisement (8) faisant saillie sur l'autre côté du plan (4) du treillis.

3. Treillis suivant la revendication 1 ou 2, caractérisé en ce qu'il comporte des barres d'entretoisement, dont au moins l'une des extrémités (7) est conformée en arceau d'entretoisement (8) qui fait saillie sur le côté (9) du plan (4) du treillis opposé à celui des organes de maintien (5).

4. Treillis suivant l'une des revendications 1 à 3, caractérisé en ce qu'il est composé de barres de treillis rectilignes (10) et, croisant celles-ci, de barres de maintien (2) et de barres d'entretoisement (6), les barres de treillis (10) étant continues d'un côté (12) du plan (4) du treillis et les barres de maintien (2) ainsi que les barres d'entretoisement (6) étant disposées de manière discontinue de l'autre côté (9) du plan (4) du treillis.

5. Treillis suivant l'une des revendications 1 à 4, caractérisé en ce que, dans la vue en plan du treillis (1), les organes de maintien (5) des barres de maintien (2) font un angle (14) de 45° environ avec les barres (10) de treillis.

6. Treillis suivant l'une des revendications 1 à 5, caractérisé en ce que les extrémités (7) des arceaux d'entretoisement (8) sont dirigés vers le plan (4) du treillis.

7. Treillis suivant l'une des revendications 1 à 6, caractérisé en ce que, suivant une direction (18) du treillis (1), les barres de maintien (2) et les barres d'entretoisement (6) sont disposées, de manière à ce que, en alternance, deux barres de maintien (2) dirigées de manière opposée l'une par rapport à l'autre succèdent à deux barres d'entretoisement (6) dirigées de manière opposée l'une par rapport à l'autre.

8. Treillis suivant la revendication 7, caractérisé en ce que des rangées parallèles et voisines de barres de maintien (2) et de barres d'entretoisement (6) sont décalées d'au moins la distance (20) comprise entre deux barres (10) de treillis voisines.

FIG.1

FIG.2